# EUROPEAN PATENT SPECIFICATION

(11) **EP 1 567 884 B1**
(45) Date of publication and mention of the grant of the patent: **05.03.2008**
(21) Application number: 03769834.7
(22) Date of filing: 14.11.2003
(51) Int. Cl.: G01S 5/14

(54) **RANGING AND POSITIONING METHOD AND APPARATUS**
ENTFERNUNGSBESTIMMUNGS- UND POSITIONIERUNGSVERFAHREN UND VORRICHTUNG
PROCEDE ET APPAREIL DE TELEMETRIE ET DE POSITIONNEMENT

(30) Priority: 27.11.2002 GB 0227634
(43) Date of publication of application: 31.08.2005
(73) Proprietor: Koninklijke Philips Electronics N.V., 5621 BA Eindhoven (NL)
(72) Inventor: Wilcox, Martin S., Redhill, Surrey RH1 5HA (GB)
(74) Representative: Damen, Daniel Martijn
(86) International application number: PCT/IB2003/005161
(87) International publication number: WO 2004/048994

(56) References cited:
- BAHL P ET AL: "RADAR: an in-building RF-based user location and tracking system" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, 26 March 2000 (2000-03-26), pages 775-784, XP010376167 ISBN: 0-7803-5880-5 cited in the application
- SKELLERN D J ET AL: "A HIGH-SPEED WIRELESS LAN" IEEE MICRO, IEEE INC. NEW YORK, US, vol. 17, no. 1, 1997, pages 40-47, XP000642695 ISSN: 0272-1732
- PATENT ABSTRACTS OF JAPAN vol. 1995, no. 05, 30 June 1995 (1995-06-30) & JP 07 038562 A (MITSUBISHI ELECTRIC CORP), 7 February 1995 (1995-02-07)

## Description

The invention relates to a method and apparatus for ranging and/or positioning, particularly for use in buildings.

Indoor positioning systems have been proposed in which the position of a receiver is calculated using radio frequency (RF) signal strength. RF signals are received from several base stations, the received signal strength is converted into a range measurement using a knowledge of the propagation environment and trilateration performed to calculate location. Trilateration is a well known mathematical technique that uses distances from known points to calculate location. Trilateration is closely related to triangulation, though the latter uses angles instead of the distances used by the former.

The most widely known example of such an indoor positioning system is the system designed by Microsoft known as RADAR which uses a combination of trilateration and pattern matching of the signal strengths with a database of measured values. RADAR is described in "RADAR: an in-building RF-based user location and tracking system", Bahl et al, Proceedings of INFOCOM 2000, Tel Aviv, March 2000.

However, such indoor positioning systems only claim accuracy of a median error distance of about 3m, about the size of a room.

Systems which use empirical models to convert signal strength measurements into range measurements can have improved performance over systems which simply assume the free space equation for signal strength as a function of distance. However, the signal strength measured in reality can deviate significantly from the empirical models alone.

There are a number of reasons for these deviations. Firstly, the variable number of partitions, walls and other objects between transmitter and receiver will cause variations in the signal strength at a receiver for a fixed distance between transmitter and receiver. Secondly, fast fading effects can cause nulls in which the signal strength is very small.

Accordingly, there is a need for an indoor positioning system giving improved accuracy of range measurements and hence position fix.

According to the invention there is provided a method of indoor positioning in a structure having corridors and/or walls extending in substantially perpendicular longitudinal and lateral directions, the method including:
providing a base station with an antenna having a cosec² sensitivity pattern oriented longitudinally;
providing a mobile station with an omnidirectional antenna;
transmitting a ranging signal from one of the base station and the mobile station to the other of the mobile station and base station; and
determining the relative signal strength of the received ranging signal compared with the transmitted signal to obtain a measure of lateral distance of the base station from the mobile station.

Thus, the invention uses an antenna having a cosec² sensitivity in the base station. In other words, taking θ to be the angle of the signal with respect to the longitudinal direction, the sensitivity of the antenna varies as cosec² θ. As will be appreciated by the skilled person, this is not intended to mean that the sensitivity of the antenna varies as cosec² θ for all values of θ. Indeed, the cosec function has a singularity for θ of 0 and 180°. Accordingly, the range of θ for which this applies may be, for example, 30° to 150° or 15° to 165° - the exact values will depend on the application and the availability and cost of suitable antennae. Outside this range the sensitivity may, for example, tail off towards values of θ of 0 and 180°.

Such antennae are known, and in particular are used in conventional radar, especially at airports. However, the effect of using such antennae in conventional radar systems is very different from the effect in the present invention. This is because in a conventional radar system using such antennae a signal is transmitted from a base station generally having a cosec² θ pattern with respect to ground. The signal is reflected by an object and then returns to the base station. Therefore, in a conventional radar system, the transmitted signal strength using a cosec² antenna varies as cosec² θ, and the reception of the signal also varies as cosec² θ, resulting in a total variation of (cosec² θ)² = cosec⁴ θ.

In contrast, in the invention the signal strength is measured on a signal transmitted in only one direction between the base and mobile stations, and so the signal strength received has a cosec² θ term and not a cosec⁴ θ term.

The invention makes use of the fact that buildings generally have a rectilinear internal structure with corridors and walls oriented in two preferred perpendicular directions, that will be referred to in this document as "longitudinal" and "lateral". The terms "longitudinal" and "lateral" are intended to refer arbitrarily to these two directions and are not intended to imply that the longitudinal direction is along the length of the building and the lateral direction along the width, since in many buildings it will be impossible to assign the longitudinal and lateral directions to the two internal preferred directions other than arbitrarily.

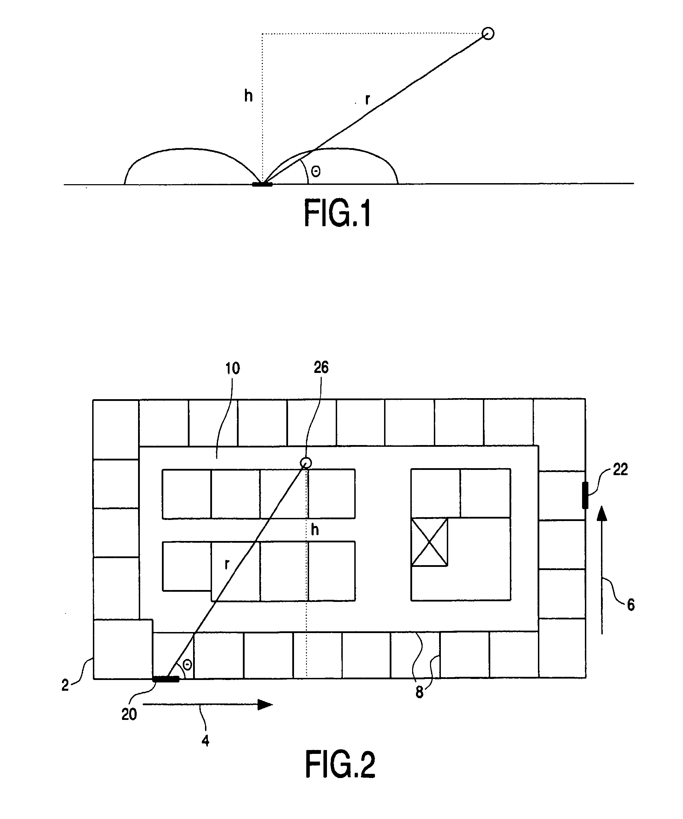

Consider a mobile station at a distance r from the base station, at an angle θ from the longitudinal direction and at a lateral spacing h from the base station (see Fig. 1). Geometrically cosec² θ = r² / h². In free space, the propagation of a signal varies as 1/r² so the use of a cosec² antenna pattern oriented longitudinally would cancel out the r² term and result in a signal strength proportional to 1/h² and thus acting as a measure of lateral distance.

Within a building, there are additional losses over and above the free-space path loss caused by attenuation as the signal passes through walls and partitions. The inventors have realised that the number of walls, partitions, etc that a signal passes through has a very significant component that varies with lateral distance, since as lateral distance increases the number of walls and partitions the signal must pass through increases. The additional losses caused by walls would be roughly constant for a signal arriving at any angle θ from a mobile station situated on a line of constant perpendicular distance h, since it has travelled through roughly the same number of walls in each case. Therefore, by using a cosec² antenna pattern in the base station the received signal is a better measure of lateral distance than the received signal would be a measure of distance using an omnidirectional antenna pattern.

It may still in many cases be necessary to use an empirical model of the internal structure of a building for accurate determination of the position of the mobile station. The inventors have noticed that the number of walls and partitions that a signal passes through is roughly constant for constant h. Accordingly, lateral distance is a better determinant of signal strength than distance alone; the use of a cosec² pattern in the base station antenna means that the raw data is a better representation of the required attenuation. Less correction is needed in the empirical model which hence gives better results.

Preferably, a second base station is provided, a second ranging signal is transmitted in one direction between the second base station and the mobile station and trilateration is used to determine the position of the mobile station using data from the ranging signals transmitted between the base stations and the mobile station. The second base station is preferably provided with an antenna having a cosec² sensitivity pattern oriented laterally.

Further preferably, one or more additional base stations is or are provided, a further ranging signal is transmitted in one direction between the additional base station or stations and the mobile station and trilateration is used to determine the position of the mobile station using data from the ranging signals transmitted between the base stations and the mobile station.

An additional base station may be provided with an antenna having a cosec² sensitivity pattern oriented vertically, thus determining which floor a mobile station is situated on.

In another aspect, the invention relates to a base station for use in positioning a mobile station in a structure having preferred longitudinal and lateral directions, comprising an antenna and a transmitter and/or receiver arranged to transmit and/or receive ranging signals to and/or from the mobile station through the antenna; wherein the antenna has a cosec² sensitivity pattern for orientation longitudinally, laterally or vertically in the building.

In a still further aspect, the invention relates to a system for positioning a mobile station in a structure having corridors and walls extending in substantially perpendicular longitudinal and lateral directions, the system comprising: a mobile station having an omnidirectional antenna; and a plurality of base stations as set out above. The system is arranged to transmit ranging signals between the mobile station and the base stations and to measure the attenuation of the received ranging signals relative to their transmitted strength.

The system may include code arranged to calculate the position of the mobile station within the building from the measured attenuation values. The code and the corresponding processor on which the code runs to carry out the calculations may be arranged in the mobile station, in the base stations or separately. In convenient embodiments, the same code calculates the attenuation values from measured received power values.

In another aspect, the invention also relates to a system in a building having corridors and walls extending in substantially perpendicular longitudinal and lateral directions, having a plurality of base stations each having an antenna with cosec² gain pattern. In this aspect, a first one of the base stations has its antenna orientated with the cosec² pattern orientated longitudinally within the building; and a second one of the base stations has its antenna orientated with the cosec² pattern orientated laterally within the building.

A third one of the base stations may be installed with its antenna oriented with the cosec² pattern vertical.

For a better understanding of the invention, embodiments will now be described, purely by way of example, with reference to the accompanying drawings in which:
Figure 1 shows a schematic diagram illustrating cosec² pattern;
Figure 2 is a plan view of a building with the positioning system of the invention installed;
Figure 3 is a side view of the building of Figure 2;
Figure 4 is a schematic diagram showing the base and mobile stations; and
Figure 5 is a flow diagram schematically illustrating operation of the mobile station.

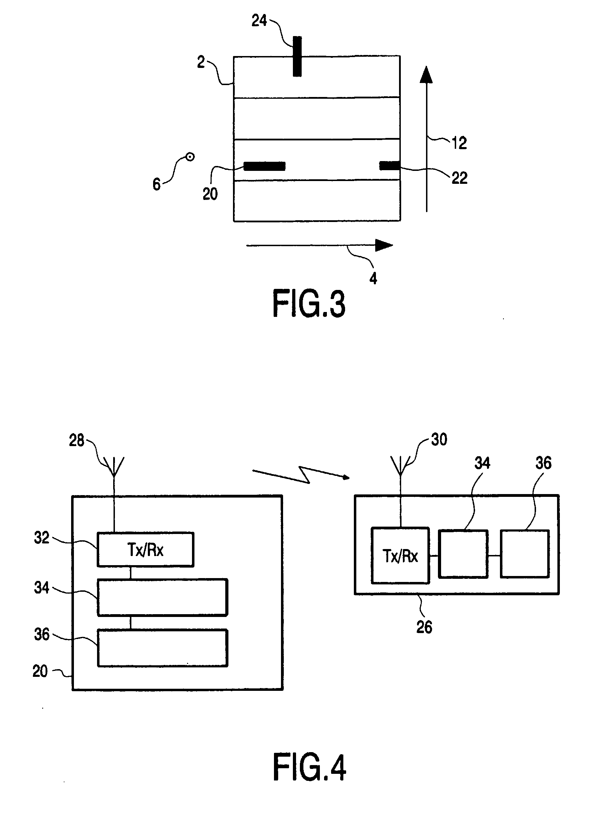

Referring to Figures 2 and 3, the invention makes use of the fact that in most buildings there are preferred longitudinal 4 and lateral directions 6 perpendicular to one another and most of the features of the building such as walls 8 and corridors 10 run parallel to the longitudinal 4 and lateral 6 directions. Similarly, referring to Figure 3, a third preferred direction is the vertical direction 12.

In the arrangement shown, three base stations are provided in the building. A first base station 20 has a cosec² antenna oriented in the longitudinal direction 4. A second base station 22 has a cosec² antenna oriented in the lateral direction 6, and a third base station 24 is mounted on the roof with an antenna having an orientation along vertical direction 12. Each of the base stations are at the edge of the building.

A mobile station 26 is located in the building. The mobile station 26 has a omnidirectional antenna.

The mobile station and base station are illustrated schematically in Figure 4. Although not specifically shown, the antenna 28 on the base station 20 is a cosec² antenna and the antenna 30 on the mobile station 26 is an omnidirectional antenna. Each of the mobile and base station contains a transmitter/receiver 32 and a controller including a processor 34 and a memory 36. Code is provided in respective memories of the mobile station and the base station for causing the respective stations to operate the methods as set out below.

In use, ranging signals are transmitted from the base stations 20, 22, 24 to the mobile station 26 under the control of the respective processors 34 in turn controlled by the code stored in the respective memories 36. The signals are picked up in the base mobile station and the signal strength is measured. The skilled person will be aware of methods of measuring signal strength and so these will not be described further.

Note that the calculations are calculated on the relative value of the received signal with respect to the transmitted signal, i.e. the attenuation. To calculate attenuation the receiver needs to know the transmitted power as well as the received power. The received power is simply measured. As for the transmitted power, a transmission power value may be sent as part of a message from the transmitter to the receiver including the transmitted power and antenna gain so that the receiver can compare the transmitted and receiver powers. Alternatively, a single effective radiated power figure can be transmitted, including both the transmitter power and the received power.

However, in the embodiment described the attenuation information is obtained by calibrating the communications link between the base station 20 and the mobile station 26. The mobile station 26 is placed at a control location at a known distance close to a base station, a signal sent and the control received power measured. Then, subsequent measurements can reference the received power to the control received power to provide a relative measure of attenuation.

Referring to the first base station 20 oriented along the longitudinal direction 4, the cosec² antenna sensitivity results in a measured signal at the mobile station 26 that attenuates roughly as 1/h² and not 1fr² since the increased transmission in the longitudinal direction 4 compensates for the greater distance as the mobile station moves away from the base station 20 at constant lateral separation h.

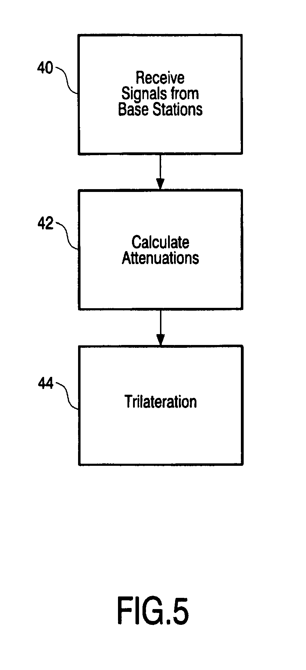

Thus, the mobile station calculates its position (Figure 5) by receiving 40 ranging signals from base stations, calculating 42 the attenuation of each of these signals and then using trilateration 44 to calculate its position. The mobile station, in this embodiment, includes code in memory 36 which causes the internal processor 34 in the mobile station to carry out these calculations. It is however possible in alternative embodiments for the code for carrying out these calculations to be provided in one or more of the base stations or in a further computer, for example a server to which all of the base stations are connected.

To a first order of approximation, the trilateration step 44 can simply use the raw attenuation values and a knowledge of an average transmission attenuation within the building. However, it is also possible to combine such simple measurements with more complex measurements of the change of attenuation with position within the building and to fit the observed attenuations to an attenuation map. Even in this second case, the invention still delivers benefits because the raw attenuation data produced corresponds roughly to the distance in the longitudinal 4, lateral 6 and vertical 12 directions and hence represents better raw data for this approach. For example, the amount of attenuation is much more accurately represented by a change in lateral distance 8 than by a change in r, the distance from mobile 26 to base 20 station.

In an alternative embodiment the system is as set out above except that the positioning system in the embodiment post-processes the position fixes.

Some positioning errors caused by the user suddenly entering a weak signal area or covering the mobile station may appear as rapid jumps in distance. Therefore, a filter is used to discard some of these position fixes as incorrect. For example, using a map, position fixes involving a rapid walk through a wall can be disregarded as inherently unlikely, as can position fixes involving excessively rapid speed down a corridor. The filter may include a Kalman filter.

Fields of application of the invention are many and varied and include parents locating their child in a shopping centre, locating doctors and patients in a hospital as well as tracking employees in a building.

From reading the present disclosure, other variations and modifications will be apparent to persons skilled in the art. Such variations and modifications may involve equivalent and other features which are already known in the design, manufacture and use of positioning systems and which may be used in addition to or instead of features described herein. Although claims have been formulated in this application to particular combinations of features, it should be understood that the scope of disclosure also includes any novel feature or any novel combination of features disclosed herein either explicitly or implicitly or any generalisation thereof, whether or not it mitigates any or all of the same technical problems as does the present invention. The applicants hereby give notice that new claims may be formulated to any such features and/or combinations of such features during the prosecution of the present application or of any further applications derived therefrom.

For example, instead of signals being transmitted from the base stations to the mobile station, some or all of the signals may be transmitted in the opposite direction. The base stations may be networked and one of them may carry out the trilateration calculations, or alternatively a separate computer system may be provided to carry out this calculation.

Nor is there any need to restrict the number of base stations to three. In large buildings, it may be efficient to provide many more than three base stations at various locations within the building and to carry out trilateration using any or all of the base stations.

The mobile station may be a tag, a mobile telephone, or any other handheld device.

Although the invention has been described with reference to a building, it also applies in other areas with a regular rectilinear pattern, for example on board a ship or in an area including a number of buildings oriented in parallel.

## Claims

1. A method of indoor positioning in a structure (2) having corridors (10) and/or walls (8) extending in substantially perpendicular longitudinal (4) and lateral (6) directions, the method including :
providing a base station (20) with an antenna (28) having a cosec² sensitivity pattern oriented longitudinally ;
providing a mobile station (26) with an omnidirectional antenna (30);
transmitting a ranging signal from one of the base station (20) and the mobile station (26) to the other of the mobile station (26) and base station (20); and
determining the relative signal strength of the received ranging signal compared with the transmitted signal to obtain a measure of lateral distance of the base station (20) from the mobile station (26).

2. A method according to claim 1 further comprising
providing a second base station (22),
transmitting a second ranging signal from one of the second base station (22) and the mobile station (26) to the other of the second base station (22) and the mobile station (26); and
determining the position of the mobile station using data from the ranging signals transmitted between the base stations and the mobile station.

3. A method according to claim 2 wherein the second base station is provided with an antenna having a cosec² sensitivity pattern oriented laterally.

4. A method according to claim 2 or 3 further comprising:
providing a third base station (24), and
transmitting a third ranging signal from one of the third base station (24) and the mobile station (26) to the other of the third base station (24) and the mobile station (26); and
determining the position of the mobile station (26) using data from the ranging signals transmitted between the base stations (20, 22, 24) and the mobile station.

5. A method according to claim 4 wherein the third base station is provided with an antenna having a cosec² sensitivity pattern oriented vertically.

6. A base station (20) for use in positioning a mobile station (26) in a structure having preferred longitudinal (4) and lateral directions (6), comprising
an antenna (28); and
a transmitter and/or receiver (32) arranged to transmit and/or receive ranging signals to and/or from the mobile station through the antenna (28);
wherein the antenna (28) has a cosec² sensitivity pattern for orientation longitudinally, laterally or vertically in the structure.

7. A system for positioning a mobile station having an omnidirectional antenna in a structure having corridors and walls extending in substantially perpendicular longitudinal and lateral directions, the system comprising:
a plurality of base stations (20,22, 24) according to claim 6
installed in the structure, wherein:
a first one of the base stations (20) has its antenna (28) orientated with the cosec² pattern orientated longitudinally (4) within the structure ; and
a second one of the base stations (22) has its antenna (28) orientated with the cosec² pattern orientated laterally (6) within the structure.

8. A system according to claim 7,
wherein the system is arranged to transmit ranging signals between the mobile station (26) and the base stations (20,22, 24) and to measure the attenuation of the received ranging signals relative to their transmitted strength.

9. A system according to claim 8, wherein the system further includes code for calculating the position of the mobile station from the measured attenuation values and the positions of the base stations.

10. A system according to any one of claims 7 to 9, wherein a third one of the base stations (24) has its antenna (28) orientated with the cosec² pattern orientated vertically (12) within the structure.

## Patentansprüche

1. Verfahren der Innenraum-Positionierung in einer Struktur (2) mit Korridoren (10) und/oder Wänden (8), die im Wesentlichen senkrecht zueinander in longitudinaler (4) und lateraler (6) Richtung verlaufen, wobei das Verfahren Folgendes umfasst:
Schaffen einer Basisstation (20) mit einer Antenne (28) mit einem in longitudinaler Richtung ausgerichteten cosec²-Empfindlichkeitsmuster;
Schaffen einer Mobilstation (26) mit einer omnidirektionalen Antenne (30);
Senden eines Entfernungsbestimmungssignals von entweder der Basisstationen (20) oder der Mobilstation (26) an die Mobilstation (26) bzw. die Basisstation (20); und
Bestimmen der relativen Signalstärke des empfangenen Entfernungsbestimmungssignals im Vergleich zu dem gesendeten Signal, um ein Maß der lateralen Entfernung der Basisstation (20) von der Mobilstation (26) zu erhalten.

2. Verfahren nach Anspruch 1, das weiterhin Folgendes umfasst:
Schaffen einer zweiten Basisstation (22);
Übertragen eines zweiten Entfernungsbestimmungssignals von entweder der zweiten Basisstation (22) oder der Mobilstation (26) an die zweite Basisstation (22) bzw. die Mobilstation (26); und
Bestimmen der Position der Mobilstation anhand von Daten, die von den zwischen den Basisstationen und der Mobilstation übertragenen Entfernungsbestimmungssignalen stammen.

3. Verfahren nach Anspruch 2, wobei die zweite Basisstation mit einer Antenne mit einem cosec²-Empfindlichkeitsmuster ausgestattet ist, das lateral ausgerichtet ist.

4. Verfahren nach Anspruch 2 oder 3, das weiterhin Folgendes umfasst:
Schaffen einer dritten Basisstation (24), und
Übertragen eines dritten Entfernungsbestimmungssignals von entweder der dritten Basisstation (24) oder der Mobilstation (26) an die dritte Basisstation (24) bzw. die Mobilstation (26); und
Bestimmen der Position der Mobilstation (26) anhand von Daten, die von den zwischen den Basisstationen (20, 22, 24) und der Mobilstation übertragenen Entfernungsbestimmungssignalen stammen.

5. Verfahren nach Anspruch 4, wobei die dritte Basisstation mit einer Antenne mit einem cosec²-Empfindlichkeitsmuster ausgestattet ist, das vertikal ausgerichtet ist.

6. Basisstation (20) zur Verwendung bei der Positionierung einer Mobilstation (26) in einer Struktur mit bevorzugten longitudinalen (4) und lateralen (6) Richtungen, wobei die Basisstation Folgendes umfasst:
eine Antenne (28); und
einen Sender und/oder Empfänger (32), der vorgesehen ist, um über die Antenne (28) Entfernungsbestimmungssignale von/zu der Mobilstation zu senden bzw. zu empfangen;
wobei die Antenne (28) ein cosec²-Empfindlichkeitsmuster zur longitudinalen, lateralen oder vertikalen Ausrichtung in der Struktur hat.

7. System zum Positionieren einer Mobilstation mit einer omnidirektionalen Antenne in einer Struktur mit Korridoren und Wänden, die im Wesentlichen in senkrecht zueinander stehenden longitudinalen und lateralen Richtungen verlaufen, wobei das System Folgendes umfasst:
eine Vielzahl von Basisstationen (20, 22, 24) gemäß Anspruch 6, die in der Struktur installiert sind; wobei
die Antenne (28) einer ersten der Basisstationen (20) so ausgerichtet ist, dass das cosec²-Muster innerhalb der Struktur longitudinal (4) ausgerichtet ist; und
die Antenne (28) einer zweiten der Basisstationen (22) so ausgerichtet ist, dass das cosec²-Muster innerhalb der Struktur lateral (6) ausgerichtet ist.

8. System nach Anspruch 7,
wobei das System dafür eingerichtet ist, Entfernungsbestimmungssignale zwischen der Mobilstation (26) und den Basisstationen (20, 22, 24) zu übertragen und die Abschwächung der empfangenen Entfernungsbestimmungssignale relativ zu ihrer Sendestärke zu messen.

9. System nach Anspruch 8, wobei das System weiterhin Code zum Berechnen der Position der Mobilstation anhand der gemessenen Abschwächungswerte und der Positionen der Basisstationen umfasst.

10. System nach einem der Ansprüche 7 bis 9, wobei die Antenne (28) einer dritten der Basisstationen (24) so ausgerichtet ist, dass das cosec²-Muster innerhalb der Struktur vertikal (12) ausgerichtet ist.

## Revendications

1. Procédé de positionnement intérieur dans une structure (2) possédant des couloirs (10) et/ou des murs (8) se prolongeant dans des directions sensiblement perpendiculaires, longitudinale (4) et latérale (6), le procédé comprenant :
la fourniture d'une station de base (20) avec une antenne (28) présentant un diagramme de sensibilité en cosec² orienté longitudinalement;
la fourniture d'une station mobile (26) avec une antenne omnidirectionnelle (30);
la transmission d'un signal de télémétrie depuis soit la station de base (20), soit la station mobile (26), jusqu'à la station mobile (26) ou la station de base (20) correspondante; et
la détermination de la force relative de signal du signal de télémétrie reçu, comparée au signal émis, pour obtenir une mesure de la distance latérale de la station de base (20) par rapport à la station mobile (26).

2. Procédé selon la revendication 1, comprenant en outre
la fourniture d'une deuxième station de base (22),
la transmission d'un deuxième signal de télémétrie depuis soit la deuxième station de base (22), soit la station mobile (26), jusqu'à la deuxième station de base (22) ou la station mobile (26) correspondante; et
la détermination de la position de la station mobile en utilisant des données provenant des signaux de télémétrie transmis entre les stations de base et la station mobile.

3. Procédé selon la revendication 2, où la deuxième station de base est pourvue d'une antenne présentant un diagramme de sensibilité en cosec² orienté latéralement.

4. Procédé selon la revendication 2 ou 3, comprenant en outre :
la fourniture d'une troisième station de base (24), et
la transmission d'un troisième signal de télémétrie depuis soit la troisième station de base (24), soit la station mobile (26), jusqu'à la troisième station de base (24) ou la station mobile (26) correspondante; et
la détermination de la position de la station mobile (26) en utilisant des données provenant des signaux de télémétrie transmis entre les stations de base (20, 22, 24) et la station mobile.

5. Procédé selon la revendication 4, où la troisième station de base est pourvue d'une antenne présentant un diagramme de sensibilité en cosec² orienté verticalement.

6. Station de base (20) destinée à être utilisée pour le positionnement d'une station mobile (26) dans une structure possédant des directions longitudinale (4) et latérale (6) préférées, comprenant
une antenne (28); et
un émetteur et/ou un récepteur (32) configuré(s) pour émettre et/ou recevoir des signaux de télémétrie en direction et/ou en provenance de la station mobile, par l'intermédiaire de l'antenne (28);
où l'antenne (28) présente un diagramme de sensibilité en cosec² pour une orientation longitudinale, latérale ou verticale, dans la structure.

7. Système destiné au positionnement d'une station mobile, possédant une antenne omnidirectionnelle, dans une structure possédant des couloirs et des murs se prolongeant dans des directions sensiblement perpendiculaires, longitudinale et latérale, le système comprenant :
une pluralité de stations de base (20, 22, 24) selon la revendication 6 installée dans la structure, où :
une première station, parmi les stations de base (20), a son antenne (28) orientée avec le diagramme en cosec² orienté longitudinalement (4) à l'intérieur de la structure; et
une deuxième station, parmi les stations de base (22), a son antenne (28) orientée avec le diagramme en cosec² orienté latéralement (6) à l'intérieur de la structure.

8. Système selon la revendication 7,
où le système est configuré pour transmettre des signaux de télémétrie entre la station mobile (26) et les stations de base (20, 22, 24), et pour mesurer l'atténuation des signaux de télémétrie reçus par rapport à leur niveau émis.

9. Système selon la revendication 8, où le système comprend en outre du code pour calculer la position de la station mobile à partir des valeurs d'atténuation mesurées et des positions des stations de base.

10. Système selon l'une quelconque des revendications 7 à 9, où une troisième station, parmi les stations de base (24), a son antenne (28) orientée avec le diagramme en cosec² orienté verticalement (12) à l'intérieur de la structure.
